# EUROPEAN PATENT SPECIFICATION

(11) **EP 3 772 773 B1**
(45) Date of publication and mention of the grant of the patent: **17.12.2025**
(21) Application number: 19190769.0
(22) Date of filing: 08.08.2019
(51) Int. Cl.: H01Q 1/24, H01Q 3/26, H01Q 21/06, H01Q 1/52, H04B 17/12

(54) **ANTENNA HOUSING**
ANTENNENGEHÄUSE
BOÎTIER D'ANTENNE

(43) Date of publication of application: 10.02.2021
(73) Proprietor: Nokia Solutions and Networks Oy, 02610 Espoo (FI)
(72) Inventor: TEMPL, Wolfgang, 74372 Sersheim (DE); WIEGNER, Dirk, 71409 Schwaikheim (DE); BULJA, Senad, Dublin, D15 V6W7 (IE)
(74) Representative: DREISS Patentanwälte PartG mbB

(56) References cited:
- EP-A1- 3 214 773
- WO-A1-2009/019526
- US-A- 5 512 906
- US-A1- 2006 273 959
- US-A1- 2011 237 207
- US-B1- 10 187 107
- US-B1- 7 215 298

## Description

### TECHNOLOGICAL FIELD

Embodiments of the present disclosure relate to an apparatus. Some relate to an antenna housing for an antenna arrangement.

### BACKGROUND

Antenna arrangements are known. An antenna arrangement may comprise a plurality of antennas arranged in an array or pattern. Some antenna arrangements enable communication with one or more remote devices. Some antenna arrangements operate in radio frequencies to enable access to telecommunications services or other services. When antennas of the antenna arrangement are located close to each other, mutual coupling can occur between nearby antennas. Further, communication channels associated with respective antennas need to be calibrated. US 2011/237207 A1 discloses an adaptive antenna neutralization network. EP 3 214 773 1 discloses an antenna array coupling and calibrating network device. US 2006/0273959 A1 discloses an array antenna calibration apparatus and method. US 5 512 906 A discloses a cross-slot cavity-backed antenna array with cylindrical resonant cavities coupled to each other by means of probes.

### BRIEF SUMMARY

According to the claimed invention there is provided an apparatus comprising: a housing arrangement for at least partially enclosing an antenna arrangement, the housing arrangement defining a first cavity for at least partially enclosing a first antenna and a second cavity for at least partially enclosing a second antenna; a radio frequency transmission line extending through the housing arrangement between the first cavity and the second cavity to enable, at least in part, a radio frequency coupling between the first cavity and the second cavity; and switching means (switching element) configured to control the radio frequency coupling between the first cavity and the second cavity by controlling the radio frequency transmission line; the apparatus further comprising an electrochromic cell configured to provide the radio frequency transmission line and the switching means.

In some, but not necessarily all examples, the switching means is configured to operate as an electrical circuit switch or as a controllable filter.

In some, but not necessarily all examples, at least a first portion of the electrochromic cell is comprised in a signal path of the radio frequency transmission line and/or wherein a second portion of the electrochromic cell is electrically coupled to ground.

In some, but not necessarily all examples, the radio frequency transmission line comprises one or more radio frequency transmission line antennas.

In some, but not necessarily all examples, the housing arrangement comprises a plurality of dividers including a first divider between the first cavity and the second cavity, and wherein the radio frequency transmission line extends through the first divider.

In some, but not necessarily all examples, the plurality of dividers includes a second divider between the first cavity and a third cavity for at least partially enclosing a third antenna, wherein the apparatus comprises a second radio frequency transmission line extending through the second divider between the first cavity and the third cavity to enable, at least in part, radio frequency coupling between the first cavity and the third cavity, and wherein the apparatus comprises second switching means configured to control the radio frequency coupling between the first cavity and the third cavity by controlling the second radio frequency transmission line.

In some, but not necessarily all examples, the first cavity and the second cavity are aligned in a row and wherein the first cavity and the third cavity are aligned in a column, or wherein the first cavity and the second cavity are aligned in a column and wherein the first cavity and the third cavity are aligned in a row.

In some, but not necessarily all examples, the housing arrangement comprises one or more covers including a first cover over the first cavity, wherein the apparatus comprises a first cover radio frequency transmission line extending through the first cover between the first cavity and an external environment to enable, at least in part, radio frequency coupling between the first cavity and the external environment, and wherein the apparatus comprises first cover switching means configured to control the radio frequency coupling between the first cavity and the external environment by controlling the first cover radio frequency transmission line.

According to various, but not necessarily all, embodiments there is provided a system comprising the apparatus, and the antenna arrangement including at least the first antenna and the second antenna.

In some, but not necessarily all examples, the system comprises a controller configured to control the switching means of the apparatus and to control the antenna arrangement.

In some, but not necessarily all examples, the controller is configured to perform calibration comprising: causing the switching means to control the radio frequency transmission line to enable, at least in part, the radio frequency coupling between the first cavity and the second cavity; causing the first antenna or the second antenna to transmit a signal; obtaining information associated with reception of the signal at the other of the first antenna or the second antenna; and causing, at least in part, provision of a calibration output dependent on the information to direct calibration of the antenna arrangement.

In some, but not necessarily all examples, the controller is configured to: obtain an indication that the calibration is complete; cause the switching means to control the radio frequency transmission line to inhibit the radio frequency coupling between the first cavity and the second cavity; and cause the first antenna and/or the second antenna to provide radio frequency communication with one or more remote devices.

According to various, but not necessarily all, embodiments there is provided a base station comprising the system.

According to various, but not necessarily all, embodiments there is provided a controller for an antenna arrangement, wherein the controller is configured to: cause switching means to control a radio frequency transmission line to enable, at least in part, a radio frequency coupling between a first cavity and a second cavity, wherein the first cavity and the second cavity are defined by a housing arrangement, wherein the first cavity at least partially encloses a first antenna of the antenna arrangement, wherein the second cavity at least partially encloses a second antenna of the antenna arrangement, and wherein the radio frequency transmission line extends through the housing arrangement between the first cavity and the second cavity; cause the first antenna or the second antenna to transmit a signal; obtain information associated with reception of the signal at the other of the first antenna or the second antenna; and cause, at least in part, provision of a calibration output dependent on the information to direct calibration of the antenna arrangement.

According to various, but not necessarily all, embodiments there is provided an apparatus comprising: a housing arrangement for at least partially enclosing an antenna arrangement, the housing arrangement defining a first cavity for at least partially enclosing a first antenna and a second cavity for at least partially enclosing a second antenna; and a switchable radio frequency transmission line extending through the housing arrangement between the first cavity and the second cavity operable to enable, at least in part, a radio frequency coupling between the first cavity and the second cavity.

According to various, but not necessarily all, embodiments there is provided an apparatus comprising: a housing arrangement for at least partially enclosing an antenna arrangement, the housing arrangement defining a first cavity for at least partially enclosing a first antenna and a second cavity for at least partially enclosing a second antenna; and a switchable-ground electrical conductor or a switchable electrochromic cell extending through the housing arrangement between the first cavity and the second cavity operable to enable, at least in part, a variable radio frequency coupling between the first cavity and the second cavity.

### BRIEF DESCRIPTION

Some example embodiments will now be described with reference to the accompanying drawings in which:
FIG. 1 shows an example embodiment of the subject matter described herein;
FIG. 2 shows another example embodiment of the subject matter described herein;
FIG. 3(a) shows another example embodiment of the subject matter described herein;
FIG. 3(b) shows another example embodiment of the subject matter described herein;
FIG. 4(a), 4(b), 4(c), 4(d) shows another example embodiment of the subject matter described herein;
FIG. 5(a) shows another example embodiment of the subject matter described herein;
FIG. 5(b) shows another example embodiment of the subject matter described herein;
FIG. 6(a), 6(b) shows another example embodiment of the subject matter described herein;
FIG. 7(a), 7(b), 7(c) shows another example embodiment of the subject matter described herein;
FIG. 8(a), 8(b), 8(c) shows another example embodiment of the subject matter described herein;
FIG. 9 shows another example embodiment of the subject matter described herein;
FIG. 10 shows another example embodiment of the subject matter described herein;
FIG. 11 shows another example embodiment of the subject matter described herein; and
FIG. 12 shows another example embodiment of the subject matter described herein.

### DETAILED DESCRIPTION

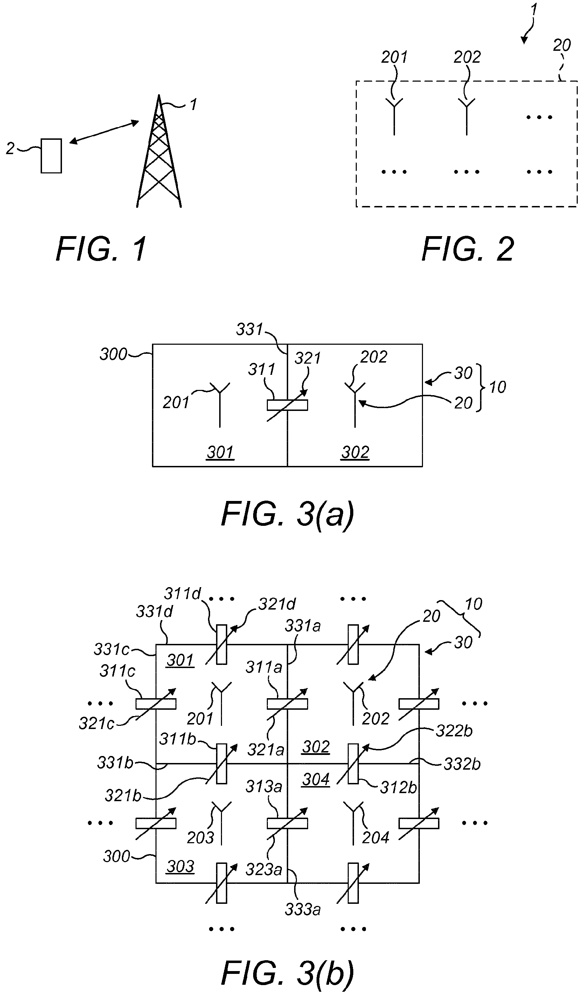

FIG. 1 illustrates an example of a radio frequency (RF) communication network. The illustrated RF communication network comprises a base station 1 within which an apparatus 30 such as illustrated from FIGS. 3(a) to 11 is implemented.

In use, the illustrated RF communication network also comprises one or more remote devices 2 within a service area of the base station 1 and in RF communication with the base station 1.

The remote devices 2 may be terminals for end users. Examples of remote terminals include portable terminals such as mobile phones or other user devices which are hand-portable. In a telecommunications system, the remote terminals may be user equipment or mobile equipment.

In the following examples, the apparatus 30 is comprised in a base station 1. However, it would be appreciated that the apparatus 30 may additionally or alternatively be comprised in a portable terminal depending on a size of the apparatus 30. The RF communication may be between two portable terminals 2 or between two base stations 1 rather than between a portable terminal 2 and a base station 1 as illustrated, and the apparatus 30 may be implemented at one or both ends.

The base station 1 comprises an antenna arrangement 20 as shown in FIG. 2. The antenna arrangement 20 comprises a plurality of antennas including a first antenna 201 and a second antenna 202. More than two antennas may be provided in some examples. The plurality of antennas may comprise transmitters and receivers, or transceivers, to enable uplink (UL) and downlink (DL) channels.

In some, but not necessarily all examples, the antenna arrangement 20 and any associated controllers may be configured to provide multiple-input multiple-output (MIMO) communication.

The MIMO scheme may be a multiuser MIMO scheme. The MIMO scheme may use spatial multiplexing. In some, but not necessarily all examples, the antenna arrangement 20 may comprise tens or hundreds of antennas, enabling an emerging technology referred to as Massive MIMO (MMIMO).

MMIMO requires precise knowledge of RF propagation channels between individual MMIMO antennas and user equipment (remote devices 2). Channel state information (CSI) may be determined for both UL and DL directions of transmission between each transceiver chain of a MMIMO base station 1 and the user equipment.

In some time division duplexing systems, it is assumed that the free space (over-the-air) sections of propagation channels between individual base station antenna(s) and UE antenna(s) have the same properties ("reciprocity assumption"). The reciprocity assumption is that it would be sufficient to know the CSI for only one direction (UL or DL). However, the entire channel comprises, besides the free-space sections, the internal paths within the base station hardware (wiring and circuit elements). These paths are specific to each individual antenna signal path, resulting in a break of symmetry between UL and DL directions. The base station hardware may experience different aging, causing the characteristics of the internal paths to vary. Therefore, it would be advantageous to determine the characteristics (e.g. gains/phase shifts) of the internal paths within the base station hardware, so that the characteristics of the reciprocal free-space propagation channel can be extracted and reciprocity calibration coefficients (phase and gain adjustments) can be determined.

One calibration method of determining the coefficients is to loop a transmitted signal back from a base station transmitter to a receiver, and measuring and evaluating the signal/channel characteristics. However, the method would lack precision due to arbitrary reflections of the signal in the environment.

Another calibration method may require adding switches and junctions in the RF signal paths of the base station hardware, interconnecting transmitter outputs directly to receiver inputs or other calibration circuitry. However, this is difficult to retrofit and can cause insertion losses due to extra components in the RF signal path. The method also does not consider influences from the antennas.

FIGS. 3(a) to 11 illustrate various examples of an apparatus 30 for the antenna arrangement 20. An advantage of the features of the apparatus 30 described below is that calibration can be made easier without the disadvantages mentioned above. The features of the apparatus 30 could be used for other purposes instead such as multi-cavity filter tuning, however the description below will refer primarily to calibration. The apparatus 30 and the antenna arrangement 20 may be provided together to define a system 10, or the apparatus 30 may be provided for retrofitting to an existing antenna arrangement 20.

The apparatus 30 comprises a housing arrangement 300 at least partially enclosing the antenna arrangement 20. The housing arrangement 300 provides a raised periphery around individual antennas to electromagnetically shield the individual antennas from each other. The housing arrangement 300 may block a line of sight between the individual antennas. The raised periphery around an antenna may be generally described as a "cup".

The housing arrangement 300 is configured to reduce mutual coupling between the individual antennas. The housing arrangement 300 shown in the top-view of FIG. 3(a) comprises a divider 331 electromagnetically shielding the first antenna 201 from the second antenna 202, to reduce mutual coupling.

The housing arrangement 300 defines cavities for the antennas. A cavity is an internal space or volume at least partially enclosed by the raised periphery provided by the housing arrangement 300, for example at least partially enclosed by a divider(s) 331 forming a raised periphery around the antennas. A divider 331 therefore acts as a side wall defining at least part of the raised periphery of the housing arrangement 300.

The divider 331 may comprise electrically conductive material, such as aluminium or copper, and may be electrically connected to a ground connection point (not shown). A divider 331 may be formed from a side wall comprising the electrically conductive material. Two neighbouring cavities 301, 302 may share a common side wall forming a divider 331. Alternatively, two neighbouring cavities 301, 302 may have no shared side walls, so in that case a divider 331 would be generally defined as the two closest parallel side walls facing each other, of the respective cavities, and including any gap therebetween.

The housing arrangement 300 defines a first cavity 301 at least partially enclosing the first antenna 201, and a second cavity 302 at least partially enclosing the second antenna 202. Therefore, the first antenna 201 is in a different cavity from the second antenna 202. In FIG. 3(a), the first cavity 301 is separated from the second cavity 302 by the divider 331.

A divider(s) 331 may surround an antenna at a plurality of sides of the antenna to define the cavity. In FIG. 3(a), four dividers surround the first antenna 201 to define a four-sided shape. However, a different number of dividers could be provided to define a different shape, or one divider could encircle an antenna. At least some antennas do not necessarily have to be surrounded at all sides, such as antennas at an edge of the antenna arrangement 20.

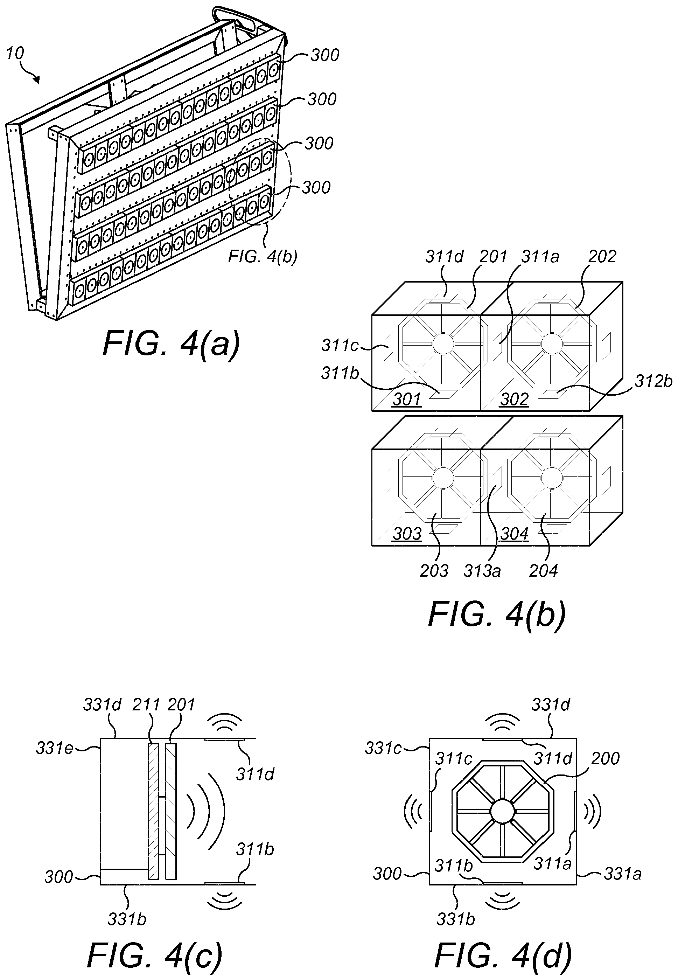

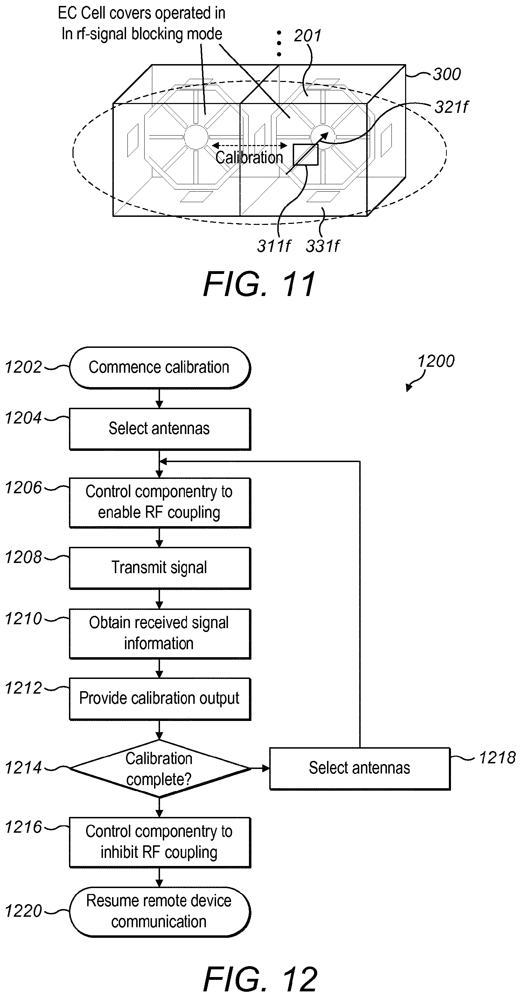

The housing arrangement 300 may partially enclose the antenna arrangement 20, leaving an opening (shown in FIG. 4(c)) in a path of a main lobe of a radiation pattern of an antenna. Alternatively, the housing arrangement 300 may fully enclose the antenna arrangement 20 with a cover that does not significantly degrade the signal. An example is described later, in relation to FIG. 11.

The housing arrangement 300 illustrated in FIG. 3(a) comprises a controllable RF transmission line 311 extending through the housing arrangement 300 between the first cavity 301 and the second cavity 302 to enable a RF coupling between the first cavity 301 and the second cavity 302.

The RF transmission line 311 acts as a low-loss transmission line for transporting radio frequencies from one location to another location, representing a gap or window in the shielding of the housing arrangement 300 through which the RF transmission line 311 extends. In FIG. 3(a), the RF transmission line 311 extends through the divider 331.

The RF transmission line 311 is configured to allow for controlled transmission of a certain fraction of the radiated radio frequencies from a transmitting antenna, into the cavity of a neighbouring receiving antenna. This enables measurement of properties of internal RF paths to individual antennas, to enable improved calibration procedures which are described later.

The RF transmission line 311 between the cavities 301, 302 advantageously means that no extra calibration components are required in the RF signal paths leading to the antenna arrangement 20, which can degrade RF signals during normal operation (communication with remote devices 2).

The RF transmission line 311 may be electrically insulated from the electrically conductive and grounded material of the housing arrangement 300.

If the RF transmission line 311 is permanently active, then mutual shielding between the cavities may be compromised. However, by controlling the RF transmission line 311, transmission between the cavities may be allowed during calibration and inhibited during normal operation (communication with remote devices 2).

FIG. 3(a) therefore illustrates switching means 321 (a switching element) that is configured to control the RF coupling between the first cavity 301 and the second cavity 302 by controlling the RF transmission line 311.

In FIG. 3(a), the switching means 321 is represented by an arrow through the RF transmission line 311, to illustrate the function of varying the RF coupling by controlling the RF transmission line 311.

The switching means 321 functions as an effector for changing the RF coupling via the RF transmission line 311. The effect of the switching means 321 may be binary, or nonbinary such as continuously variable or having more than two discrete states. The switching means 321 may be regarded as an actuator. The term actuator as used herein is not limited to a device providing a mechanical output. For example, an actuator may provide an electrical state change without motion or a mechanism involved. The later Figures show that the switching means 321 may be implemented in various ways.

FIGS. 3(a) to 3(b) illustrate top views of different housing arrangements of the apparatus 30 for different antenna arrangements. In FIG. 3(a), a housing arrangement 300 for a pair of antennas is shown. In FIG. 3(b), a housing arrangement 300 for a larger grid of antennas is shown. FIG. 3(b) shows that the apparatus 30 can be used with multiple rows of antennas. FIG. 3(b) illustrates a 2x2 portion of a grid of antennas of the antenna arrangement 20 according to an example non-limiting implementation.

The housing arrangement 300 of the apparatus 30 of FIG. 3(b) defines a first cavity 301 for a first antenna 201, a second cavity 302 for a second antenna 202, a third cavity 303 for a third antenna 203, and a fourth cavity 304 for a fourth antenna 204. The first and second cavities 301 , 302 are in a first row, and the third and fourth cavities 303, 304 are in a second (neighbouring) row. Additional cavities for additional antennas may be provided but are not shown.

The boundaries of a multi-sided cavity 301 as illustrated may be formed by at least a first divider 331a, a second divider 331b, a third divider 331c, and a fourth divider 331d, extending around an antenna. In the illustration, first and third dividers 331a, 331c separate neighbouring columns of antennas and cavities, and second and fourth dividers 331b, 331d separate neighbouring rows of antennas and cavities. The dividers of a single row or single column, or all the dividers, may optionally be mechanically fixed to each other.

In FIG. 3(b), the columns are perpendicular to the rows. In other examples, the columns may extend in a different direction non-parallel to a row, for example if the dividers form hexagonal or other shapes.

FIG. 3(b) shows that a plurality of RF transmission lines may extend from a single cavity towards different neighbouring and adjacent cavities. The RF transmission lines may be individually controllable via respective switching means. For example, FIG. 3(b) shows the first cavity 301 comprising:
a first divider 331a comprising a first RF transmission line 311a and first switching means 321a;
a second divider 331b comprising a second RF transmission line 311b and second switching means 321b;
a third divider 331c comprising a third RF transmission line 311c and third switching means 321c; and
a fourth divider 331d comprising a fourth RF transmission line 311d and fourth switching means 321d.

FIG. 3(b) shows RF transmission lines extending across rows and across columns. FIG. 3(b) shows that:
the first cavity 301 and second cavity 302 (same row) may be separated by a first divider 331a of the first cavity 301, the first divider 331a comprising an RF transmission line 311a and associated switching means 321a;
the first cavity 301 and the third cavity 303 (different row) may be separated by a second divider 331b of the first cavity 301, the second divider 331b comprising an RF transmission line 311b and associated switching means 321b;
the second cavity 302 and the fourth cavity 304 (different row) may be separated by a second divider 332b of the second cavity 302, the second divider 332b comprising an RF transmission line 312b and associated switching means 322b; and
the third cavity 303 and the fourth cavity 304 (same row) may be separated by a first divider 333a of the third cavity 303, the first divider 333a comprising an RF transmission line 313a and associated switching means 323a.

FIGS. 4(a) to 4(d) illustrate an example implementation for an apparatus 30 as described above, also wherein the antenna arrangement 20 comprises a plurality of antennas arranged in rows and columns.

FIG. 4(a) shows that the row spacing of the antenna arrangement 20 may be different from the column spacing of the antenna arrangement 20, if required. The spacing depends on a required antenna-to-antenna separation and/or required width of a beam produced by the antennas in horizontal and vertical dimensions. In FIG. 4(a), but not necessarily in all examples, the row spacing is greater than the column spacing. Alternatively, the column spacing may be greater than the row spacing. The housing arrangement 300 of the apparatus 30 has correspondingly different row and column spacings between the cavities.

FIG. 4(a) also shows that a plane occupied by the antenna arrangement 20 need not be vertical. In FIG. 4(a), the plane of the antenna arrangement 20 is tilted to a non-vertical angle, in this case a few degrees downwards from vertical which is useful for elevated base stations. This angle depends on the required beam direction.

Although the illustrated plane occupied by the antenna arrangement 20 is flat, it could be curved to widen a service area. A pair of antenna arrangements 20 could face opposite directions to provide a greater service area.

FIG. 4(b) illustrates a 2x2 section of the apparatus 30 and antenna arrangement 20, similar to FIG. 3(b).

FIG. 4(a) and 4(b) show that as a consequence of the different row and column spacing, a row divider may differ from a column divider. In FIG 4(a), a column divider comprises one side wall shared by two neighbouring cavities. A row divider comprises two non-shared side walls with a gap therebetween. For non-shared side walls, an RF transmission line 311 is provided by windows in both of the side walls.

FIG. 4(c) shows a side-view cross-section of the apparatus 30 and antenna arrangement 20, depicting a single cavity 301. This reveals a back wall 331e at a rear of the housing arrangement 300 behind the antennas. The dividers 331a, 331b, 331c, 331d extend away from the back wall 331e and are mechanically interconnected with each other by the back wall 331e. In other examples, the dividers 331a, 331b, 331c, 331d could be fixed to the antenna arrangement 20 in different ways.

The illustrated antenna 201 is inside the cavity 301 defined by the back wall 331e and dividers 331a, 331b, 331c, 331d.

Although the illustrated dividers 331a, 331b, 331c, 331d are perpendicular to the back wall 331e to define a box-section, the dividers 331a, 331b, 331c, 331d may extend at different angles in other examples.

FIG. 4(c) illustrates an opening in the housing arrangement 300 in a path of a main lobe of the antenna 201. The opening is uncovered in this example, meaning that the antenna 201 is only partially enclosed. However, the openings may alternatively be replaced with covers in other examples described later.

The depth of the back wall 331e from the opening depends on the depths of the dividers 331a, 331b, 331c, 331d. The antenna 201 is set back from the opening in the depth direction. Therefore, the dividers 331a, 331b, 331c, 331d extend past the antenna 201 in the depth direction to act as a cup to shield the antenna 201 within the cavity 301 from neighbouring antennas.

FIG. 4(c) is only one of several possible implementations. For example, the antenna 201 may not be spaced from the back wall 331e. For example, the back wall 331e may be omitted.

FIG. 4(c) also illustrates RF circuitry 211 within the cavity 301 and between the antenna 201 and the back wall 331e. The RF circuitry 211 may provide the function of a ground plane and antenna feed, for example. Alternatively, the RF circuitry 211 may be outside the cavity 301 such as behind the back wall 331e.

FIG. 4(d) illustrates a top-view cross-section of the apparatus 30 and antenna arrangement 20, depicting a single cavity. The arrangement is similar to FIG. 3(b).

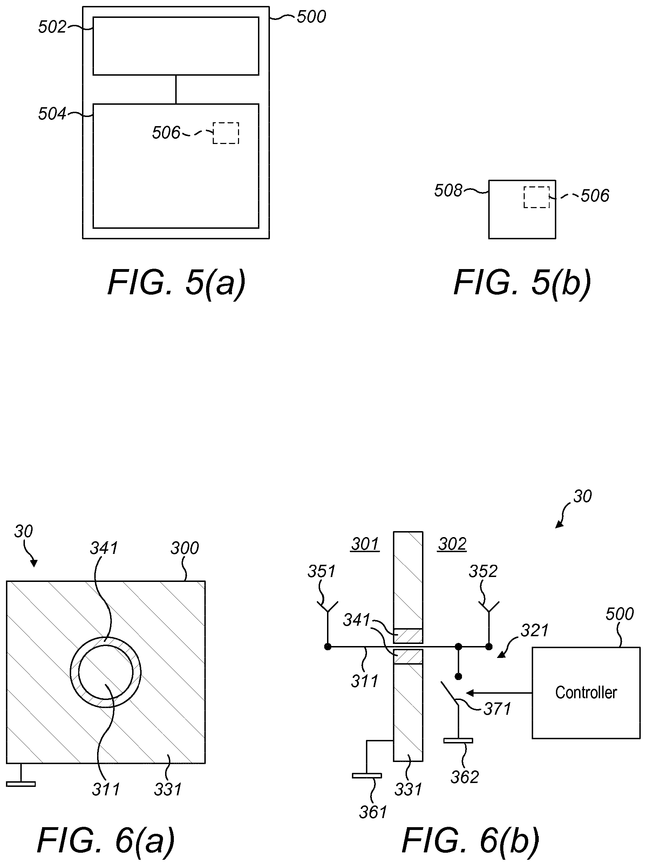

FIG. 5(a) illustrates a controller 500. In use, the controller 500 may form part of the system 10. The controller 500 may be configured to control the antenna arrangement 20 and configured to control the switching means 321 of the apparatus 30. The controller 500 comprises: at least one processor 502; and at least one memory 504 including computer program code 506, the at least one memory 504 and the computer program code 506 configured to, with the at least one processor 502, cause the controller 500 at least to perform one or more of the methods described herein. As illustrated in FIG. 5(b), the computer program 506 may arrive at the controller via any suitable delivery mechanism 508, examples of which are described later.

FIGS. 6(a) to 6(b) illustrate an example implementation of the RF transmission line 311 and the switching means 321. To summarise, the switching means 321 may act as an electrical circuit switch 371 in a ground link leading to a first ground connection point 362. The first ground connection point 362 may, for example, be an electrical connection to the grounded parts of the housing arrangement 300 such as the divider 331. When the switch is open for calibration, the RF transmission line 311 enables the RF coupling. When the switch is closed, the RF coupling is inhibited/inactive to reduce RF leakage between neighbouring antennas in different cavities.

FIG. 6(a) illustrates a cross-section perpendicular to a divider 331 and FIG. 6(b) illustrates a cross-section parallel to a divider 331.

In more detail, FIGS. 6(a) to 6(b) illustrate a first cavity 301 separated from a second cavity 302 by the housing arrangement 300. The divider 331 of the housing arrangement 300 shields the first cavity 301 and second cavity 302 from each other, for example as illustrated the divider 331 may comprise an electrical connection to a ground connection point 361 which may be the same as or different from the first ground connection point 362.

The RF transmission line 311 extends between the first cavity 301 and the second cavity 302, through the housing arrangement 300. The RF transmission line 311 may comprise an electrical conductor such as a wire which may be rigid or flexible.

Assuming the antenna arrangement 20 is compact (e.g. antenna-to-antenna spacing <1 metre), the RF transmission line 311 in the various examples of the present disclosure may be short in length (e.g. less than antenna-to-antenna spacing). The RF transmission line 311 may be substantially straight. The RF transmission line 311 therefore provides a direct path between the first cavity 301 and the second cavity 302, rather than having to rely on arbitrary reflections in an external environment for calibration. In an example implementation, an RF transmission line 311 may have a length of less than 1 centimetre to pass between cavities. For example, a divider of less than 5mm thickness may require an RF transmission line of less than 5mm length.

FIG. 6(a) illustrates electrical isolation 341 between the RF transmission line 311 and the housing arrangement 300. The electrical isolation 341 may comprise an electrical insulator attached to the RF transmission line 311 such as an insulating sheath and/or may comprise an electrical insulator attached to the housing arrangement 300.

The RF transmission line 311 has an electrical length configured to operate in one or more operational resonant frequency bands. The illustration shows that RF transmission line antennas 351, 352 may be provided in order to tune the RF transmission line 311 to provide desired resonance characteristics. For example, the RF transmission line 311 and the RF transmission line antennas 351, 352 may have a desired electrical length. An RF transmission line antenna may be a length of transmission line that is connected at one end only. The free end of the RF transmission line antenna may be open-circuit. In FIG. 6(b), two RF transmission line antennas 351, 352 are provided, one in each cavity 301, 302, to enable bidirectional operation.

FIG. 6(b) illustrates a controllable ground link extending from the RF transmission line 311 to the first ground connection point 362. The switching means 321 comprises an electrical circuit switch 371 comprised in the ground link. such as a solid-state semiconductor or electromechanical switch. The electrical circuit switch 371 may be at least a single pole single throw switch. The state of the electrical circuit switch 371 (open or closed) may be controlled directly or indirectly by the controller 500.

When the electrical circuit switch 371 is open for calibration, a transmitting antenna in one of the cavities may transmit a signal, and a receiving antenna in the other of the cavities receives a fraction of the signal via the RF transmission line 311. The signal has therefore travelled through the channels of the transmit and receive antennas, and is then passed to the controller 500 for calibration. When the electrical circuit switch 371 is closed for normal operation, the RF transmission line 311 is inactive to improve the shielding of the cavities 301, 302 from each other.

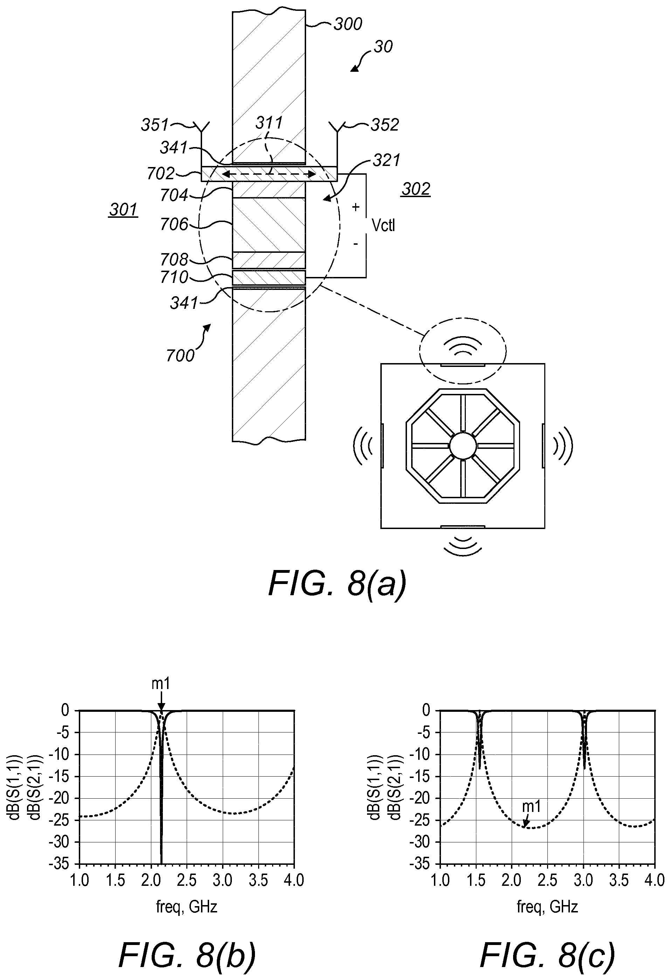

In example implementations shown in FIGS. 8(a) to 11, the apparatus 30 may comprise an electrochromic cell. Electrochromic cells comprise electrochromic material. Electrochromism is a phenomenon where optical properties such as colour of an electrochromic material changes by applying a DC bias voltage. Electrochromic material possesses controllable electrical properties related to the electrochromic effect. Electrical properties of electrochromic material including permittivity and dielectric losses can be advantageously tuned by controlling the bias voltage across the electrochromic cell, within a wide range, to provide a desired radio frequency transmission performance. For these purposes, electrochromic cells can be integrated into the housing arrangement with less complexity and improved conformability compared to RF transistor components or other tuneable media. Different window sizes can even be manufactured for different cavities, with reduced complexity.

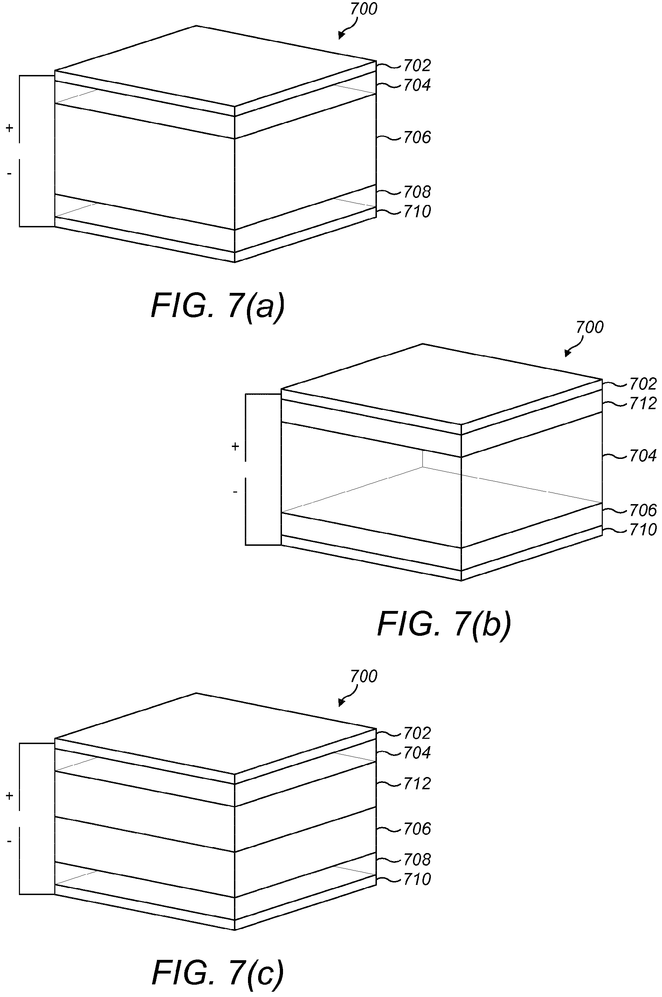

FIGS. 7(a) to 7(c) illustrate example structures for an electrochromic cell 700 comprising electrochromic material 706, a voltage biaser 702, 710 configured to control electrical properties of the electrochromic cell 700, and other layers such as electrolyte layers 704, 708.

In some, but not necessarily in all examples, the electrochromic cell 700 is a stack of layers. The voltage biaser comprises a pair of conductor layers 702, 710 of electrically conductive material. In use, the voltage biaser 702, 710 may be configured to apply a bias voltage from a bias voltage source (not shown) to the electrochromic cell 700, wherein the bias voltage magnitude may be controlled by the controller 500.

The electrochromic material 706 is a layer, such as a film, between the conductor layers 702, 710 of the voltage biaser. One or each of the conductor layers 702, 710 is separated from the electrochromic material 706 by one or more other layers. In FIG. 7(a), each conductor layer 702, 710 is separated from the electrochromic material 706 by a respective electrolyte layer 704, 708, however this is not the only usable configuration of the layers between the conductor layers 702, 710. For example, in FIG. 7(b), an ion storage layer 712 is stacked above a single electrolyte layer 704, which is stacked above a layer of electrochromic material 706. In FIG. 7(c), an ion storage layer 712 and a layer of electrochromic material 706 are between a pair of electrolyte layers 704, 708.

In some, but not necessarily in all examples, the electrochromic material 706 comprises a transition metal. The transition metal may comprise tungsten(VI) oxide (WO₃), also known as tungsten trioxide, or a suitable alternative such as NiO, TiO₂, VO₂, etc. WO₃ exhibits a high degree of tuneability and other desirable properties.

In some, but not necessarily all examples, the electrolyte layer(s) 704, 708 comprise lithium niobite LiNbO₃ or a suitable alternative such as cryolite, or rubidium silver iodide.

In some, but not necessarily all examples, the ion storage layer 712 comprises Nickel(II) oxide NiO or a suitable alternative.

In the following example implementations, the electrochromic cell 700 and the voltage biaser 702, 710 together provide the functionality of the RF transmission line 311 and the switching means 321 of the apparatus 30.

An example implementation of the apparatus 30 that uses an electrochromic cell 700 is shown in FIGS. 8(a) to 8(b). In summary, the RF transmission line 311 is, or is electrically connected to a first portion 702 of the electrochromic cell 700, and a second portion 710 of the electrochromic cell 700 is electrically coupled to ground. The voltage biaser 702, 710 provides the functionality of the switching means 321 by controllably filtering the RF coupling in the RF transmission line 311.

The illustration shows that the electrochromic cell 700 comprising the electrochromic material 706 and the voltage biaser 702, 710 may be located in the housing arrangement 300, e.g. divider 331, between the first cavity 301 and the second cavity 302.

In FIG. 8(a), a first conductor 702 of the voltage biaser 702, 710 is electrically connected to, and/or forms at least part of, the RF transmission line 311. The RF transmission line 311 has an electrical length configured to operate in one or more operational resonant frequency bands. The illustration shows that RF transmission line antennas 351, 352 may be provided if required, in order to provide the desired electrical length of the RF transmission line 311.

In FIG. 8(a), a second conductor 710 of the voltage biaser 702, 710 is grounded. For example, the second conductor 710 may be electrically connected to the grounded housing arrangement 300.

The first conductor 702 and the second conductor 710 may be configured to be electrically coupled to a bias voltage source (not shown) to provide a controlled bias voltage Vctl controlled by the controller 500.

At least the first conductor 702 may be electrically isolated from the electrically conductive material of the housing arrangement 300 by electrical isolation 341.

When the bias voltage is increased, the dielectric permittivity of the electrochromic cell 700 increases. This changes the environment in which the RF signal propagates, which depends on dielectric characteristics. The electrochromic cell 700 coupled to the RF transmission line 311 may be regarded as a controllable filter.

FIGS. 8(b) and 8(c) are frequency response plots from a simulation illustrating which frequencies are passed with high powerat different dielectric permittivities. The simulated RF transmission line 311 was 5mm thick and 2.4mm in length. The gain at an operational frequency of 2.14GHz is marked with a marker m1.

FIG. 8(b) shows that when the relative permittivity εᵣ is around εᵣ∼1000, the gain at the operational resonant frequency of 2.14GHz is -0.211dB. The RF coupling in the RF transmission line 311 is therefore active at the operational resonant frequency. This relative permittivity can be used during calibration.

FIG. 8(c) shows that when the relative permittivity is higher, for example around εᵣ∼2000, the gain at the operational frequency of 2.14GHz is lower, around -26dB. The signal power in the operational resonant frequency band is therefore much lower. The RF transmission line 311 is therefore inactive at the operational resonant frequency.

If an antenna arrangement 20 requires calibration for a plurality of different operational resonant frequency bands, the controller 500 may be configured to select a bias voltage in dependence on a selection of an operational resonant frequency passband for calibration. The bias voltage may be varied depending on the selected operational resonant frequency passband, to enable the RF coupling at the selected operational resonant frequency passband for calibration.

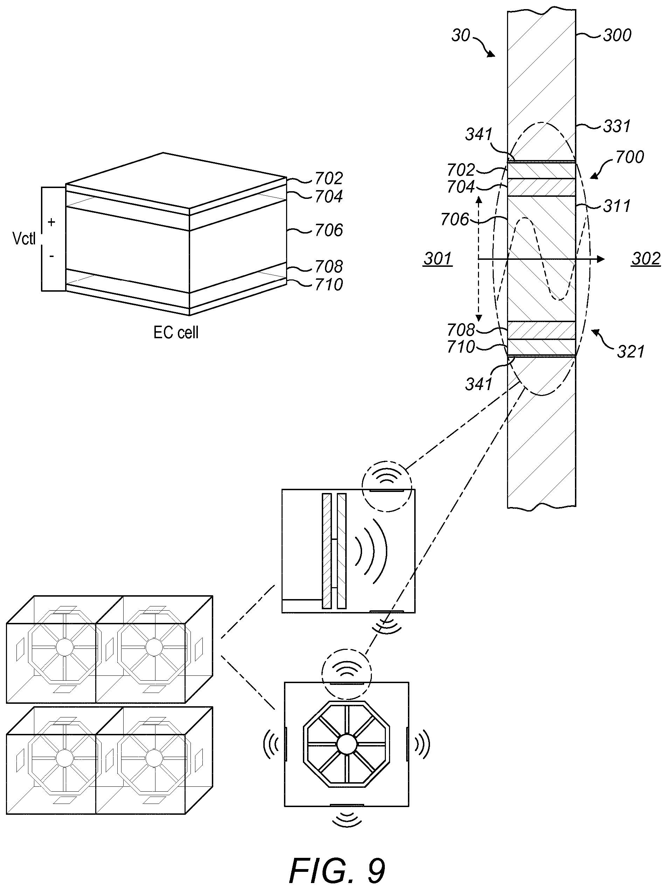

Another example implementation of the apparatus 30 that uses an electrochromic cell 700 is shown in FIG. 9. In summary, at least a first portion 706 of the electrochromic cell 700 provides the functionality of the RF transmission line 311 and defines the signal path of the RF transmission line 311. The voltage biaser 702, 710 provides the functionality of the switching means 321 by controlling the electrical properties of the electrochromic cell 700 in analogy to an electrical circuit switch.

A first lateral side of the electrochromic cell 700 is exposed at the surface of the housing arrangement 300 facing the first cavity 301. The exposed surface area of the electrochromic cell 700 depends at least on the thickness of the layer. A second lateral side of the layer of electrochromic cell 700, opposite the first lateral side, is exposed at the surface of the housing arrangement 300 facing the second cavity 302.

The geometry of the electrochromic cell 700 is configured to enable RF coupling through the electrochromic cell 700, when the electrochromic cell 700 is in its conductive state for calibration purposes. When the electrochromic cell 700 is in its insulating state, the RF coupling is prevented and inactive. Control of the bias voltage changes the permittivity of the electrochromic cell 700.

Other aspects of the design and layout of the electrochromic cell 700 may be similar to FIG. 8(a). An advantage of FIG. 8(a) compared to FIG. 9 is that FIG. 8(a) may require less electrochromic material 706 whereas FIG. 9 may require a greater thickness and mass of electrochromic material 706 with precise dimensions. An advantage of FIG. 9 compared to FIG. 8(a) is improved isolation between cavities and correspondingly higher bandwidth, because a bypass formed by the voltage biaser 702, 710 can be avoided.

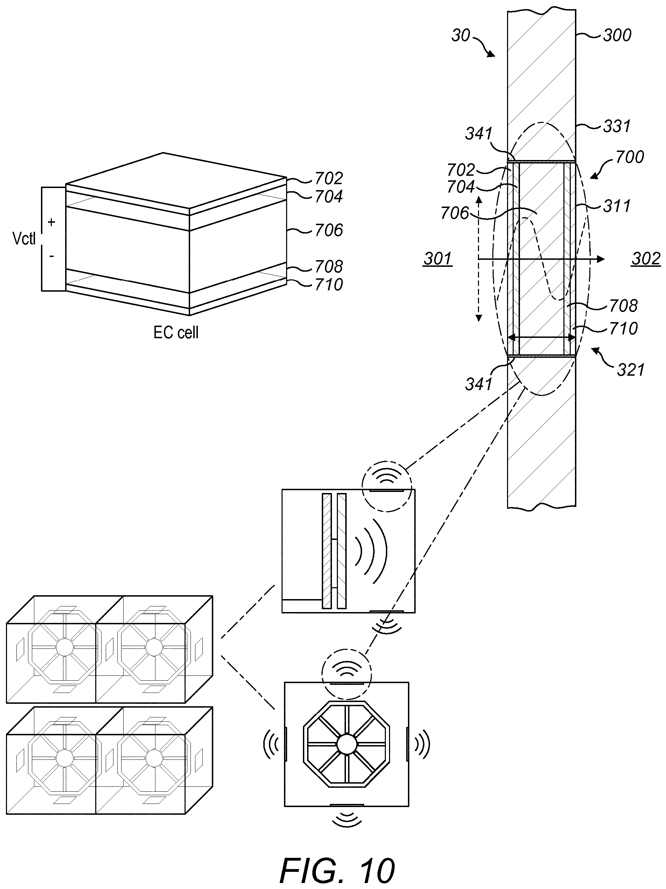

FIG. 10 is a variant of FIG. 9 in which the electrochromic cell 700 is in a different orientation compared to FIG. 9. In FIG. 9 the layers of the electrochromic cell 700 are approximately perpendicular to the plane of the divider 331. In FIG. 10, but not necessarily all examples, the layers of the electrochromic cell 700 are approximately parallel to the plane of the divider 331.

FIG. 10 shows that multiple layers of the electrochromic cell 700 may act as both the RF transmission line 311 and the switching means 321. In FIG. 10, but not necessarily in all examples, the RF transmission line 311 passes through every layer of the electrochromic cell 700. The surface areas of exposed lateral sides of the electrochromic cell 700 facing the first and second cavities 301, 302 may be configured to enable the RF coupling through the electrochromic cell 700. The voltage biaser 702, 710 provides the switching means 321 and a portion of the RF transmission line 311.

FIG. 11 illustrates an optional additional feature for the apparatus 30, wherein the housing arrangement 300 comprises controllable covers 331f for one or more or all of the cavities. A cover 331f with controllable insertion loss enables a subset of the antennas of the antenna arrangement 20 to be calibrated while being shielded from interference from the external environment and from other antennas of the antenna arrangement 20 that are concurrently operating normally and communicating with remote devices 2. When the calibrated antennas resume normal operation, the insertion loss of the cover 331f may be reduced (e.g. minimised) to avoid signal blocking.

To provide a controllable insertion loss of the cover 331f, a cover 331f may comprise a cover RF transmission line 311f extending through the cover 331f between a cavity 301 and the external environment (service area outside the cavity) to enable, at least in part, an RF coupling between the first cavity 301 and the external environment. A cover 331f may comprise cover switching means 321f configured to control the insertion loss by controlling the RF coupling between the cavity and the external environment by controlling the cover RF transmission line 311f.

In some, but not necessarily all examples, the cover RF transmission line 311f and switching means 321f are provided by an electrochromic cell 700 that is arranged as shown in FIGS. 8(a), 9 or 10, except in the cover 331f rather than in the divider 331.

During calibration, the switching means 321f of the cover(s) 331f for the antennas being used for calibration may be controlled to inhibit RF coupling with the external environment and shield the antennas against RF interference from operational antennas. During normal operation, the switching means 321f of the cover(s) 331f may be controlled to enable RF coupling with the external environment with reduced insertion loss. To minimise insertion loss, an electrochromic cell 700 arranged as shown in Fig 10 may span a large area of the cover 331f, or may even provide the entirety of the cover 331f.

The housing arrangement 300 in FIG. 11 defines a cuboidal radome for an antenna 201. Edges of the box shape demarcate the cover 331f, the dividers 331a, 331b, 331c, 331d, and the back wall 331e. The housing arrangement 300 may be regarded as fully enclosing a cavity.

In other examples, the radome defined by the housing arrangement 300 could form a different shape than a cuboid with more or fewer edges, or no edges (e.g. dome). A cover 331f would therefore be regarded as a portion of the housing arrangement 300 that resides in a path of a main lobe of a radiation pattern of the antenna 201 in the cavity. A back wall would be regarded as the portion that is behind the antenna, and a divider would be regarded as the portion between the back wall and the cover.

A single controllable cover 331f may control insertion loss for a single cavity 301 and antenna 201, or a single controllable cover 331f may be larger to control insertion loss for a group of cavities and antennas.

FIG. 12 illustrates an example of a calibration method 1200. The calibration method 1200 may be performed by the controller 500. The calibration method 1200 controls the antennas and controls the switching means 321 of the apparatus 30.

The method 1200 commences at block 1202, wherein the controller 500 commences the method 1200. The method 1200 may be triggered automatically or manually.

At block 1204, the method 1200 optionally comprises selecting a first antenna 201 and a second antenna 202 of the antenna arrangement 20. The first antenna 201 and the second antenna 202 may be neighbouring antennas or, in some examples, non-neighbouring antennas. One of the selected antennas will operate as a transmitter to transmit a signal and the other of the selected antennas will operate as a receiver.

At block 1206, the method 1200 comprises causing the switching means 321 to control the RF transmission line(s) 311 between the first cavity 301 and the second cavity 302 to enable the RF coupling between the first cavity 301 and the second cavity 302. Example implementations as defined earlier include opening the grounded electrical circuit switch (FIG. 6(a)) or changing the bias voltage to the electrochromic cell 700 (FIGS. 8(a) to 11).

At block 1208, the method 1200 comprises controlling the first antenna 201 or the second antenna 202 to transmit a signal. The signal may optionally be a dedicated calibration signal. A calibration signal does not necessarily identify a remote device 2 and/or may be a fixed reference signal. Part of the signal should be received by the other (receiving) antenna due to the RF coupling enabled by the RF transmission line(s) 311.

At block 1210, the method 1200 comprises obtaining information associated with reception of the signal at the receiving one of the first antenna 201 or the second antenna 202. The information may be indicative of characteristics (e.g. transmitter gain, receiver gain, and/or phase shift) of channel sections within the transmitter and receiver hardware of the first and second antennas 201, 202. The characteristics may differ due to the design of the base station 1 and antenna arrangement 20, different aging of hardware, etc.

At block 1212, the method 1200 comprises causing, at least in part, provision of a calibration output dependent on the information to direct calibration of the antenna arrangement 20.

Depending on implementation, the calibration output may be directed to a local or remote human machine interface to prompt manual calibration and optionally to provide any relevant details such as characteristics (gains/phase) of the received information, or a calibration may be performed automatically. If calibration is performed automatically, a calibration algorithm (e.g. calibration analyser) may be implemented at the controller 500 or a remote computer, and a calibration output from the calibration algorithm may be directed to beamformers/phase shifters/amplifiers for the antenna arrangement 20 to provide hardware-relevant gain/phase compensation terms determined by the calibration algorithm, for influencing global antenna weights (amplitude, phase) used to control MMIMO or beamforming operations.

An example calibration algorithm may determine the characteristics such as gain and/or phase from the obtained information, and determine reciprocity calibration coefficients in dependence on the characteristics and in dependence on CSI.

In order to improve accuracy of calibration, the calibration algorithm may utilize repeats of blocks 1206, 1208, 1210 that select different antenna pairings and/or transmit a second signal between the same antennas in the opposite direction (swap transmit/receive sides). This enables the characteristics of an individual transmit path and the characteristics of an individual receive path to be distinguished.

In some examples, the calibration algorithm may compensate for the effect of the RF transmission line(s) 311 on the signal, because the channel sections used in normal operation do not include the RF transmission lines. The calibration algorithm may subtract characteristics of the RF transmission lines 311 from the overall characteristics. The characteristics of the RF transmission lines 311 may be known from pre-calibration. The characteristics of the RF transmission lines 311 may even be measured by: opening RF transmission lines 311 in sequence such as 311(n), 311(n+1), and 311(n+2) in a single row or single column; and measuring the attenuation and phase effect caused by each RF transmission line 311 using calibrated receiver antennas in the corresponding: cavity comprising the [311(n), 311(n+1)] RF transmission lines; cavity comprising the [311(n+1), 311(n+2)] RF transmission lines; and cavity comprising the [311(n+2), 311(n+3)] RF transmission lines.

The calibration method 1200 enables uncertainty in channel estimation to be reduced. This is because the properties of a reciprocal free-space propagation channel cannot be extracted accurately without compensating for the hardware portions of channels that reside between the start (analog-digital converter ADC, or DAC) of the channel and the antenna.

At block 1214, the method 1200 optionally comprises determining whether calibration is complete. A condition for whether calibration is complete may be whether a required number of antennas have been selected and tested using the above method.

If the calibration is not complete, the method 1200 proceeds to optional block 1218 to select next antennas. When the next antennas have been selected, the method 1200 loops back to a point after block 1204. The next antennas could be different antennas, or the same antennas with the signal direction swapped (swap from transmit to receive and from receive to transmit). The method is repeated until all antennas that require calibrating have been calibrated.

When calibration is complete, the method 1200 proceeds to optional block 1216 which controls the switching means 321 of the apparatus 30 to inhibit the RF couplings between the cavities 301, 302. This includes the switching means 321 previously controlled at block 1206 to enable the RF coupling. In some examples, the calibration output of block 1212 may be provided after block 1214 or 1216. Block 1216 may occur earlier in the method 1200 but after block 1208. Block 1216 may occur when looping via block 1218.

At block 1220, the method 1200 terminates and normal operation resumes. Normal operation comprises communication with remote devices 2.

If a controllable cover(s) 331f is provided, block 1206 may comprise controlling the relevant cover(s) 331f associated with the selected cavities, to inhibit RF coupling with the external environment through the cover 331f. Block 1216 may comprise controlling the relevant cover(s) 331f to enable RF coupling with the external environment through the cover 331f.

The RF circuitry and the antennas may be configured to operate in a plurality of operational resonant frequency bands. For example, the operational frequency bands may include (but are not limited to) Long Term Evolution (LTE) (US) (734 to 746 MHz and 869 to 894 MHz), Long Term Evolution (LTE) (rest of the world) (791 to 821 MHz and 925 to 960 MHz), amplitude modulation (AM) radio (0.535-1.705 MHz); frequency modulation (FM) radio (76-108 MHz); Bluetooth (2400-2483.5 MHz); wireless local area network (WLAN) (2400-2483.5 MHz); hiper local area network (HiperLAN) (5150-5850 MHz); global positioning system (GPS) (1570.42-1580.42 MHz); US - Global system for mobile communications (US-GSM) 850 (824-894 MHz) and 1900 (1850 - 1990 MHz); European global system for mobile communications (EGSM) 900 (880-960 MHz) and 1800 (1710 - 1880 MHz); European wideband code division multiple access (EU-WCDMA) 900 (880-960 MHz); personal communications network (PCN/DCS) 1800 (1710-1880 MHz); US wideband code division multiple access (US-WCDMA) 1700 (transmit: 1710 to 1755 MHz , receive: 2110 to 2155 MHz) and 1900 (1850-1990 MHz); wideband code division multiple access (WCDMA) 2100 (transmit: 1920-1980 MHz, receive: 2110-2180 MHz); personal communications service (PCS) 1900 (1850-1990 MHz); time division synchronous code division multiple access (TD-SCDMA) (1900 MHz to 1920 MHz, 2010 MHz to 2025 MHz), ultra wideband (UWB) Lower (3100-4900 MHz); UWB Upper (6000-10600 MHz); digital video broadcasting - handheld (DVB-H) (470-702 MHz); DVB-H US (1670-1675 MHz); digital radio mondiale (DRM) (0.15-30 MHz); worldwide interoperability for microwave access (WiMax) (2300-2400 MHz, 2305-2360 MHz, 2496-2690 MHz, 3300-3400 MHz, 3400-3800 MHz, 5250-5875 MHz); digital audio broadcasting (DAB) (174.928-239.2 MHz, 1452.96-1490.62 MHz); radio frequency identification low frequency (RFID LF) (0.125-0.134 MHz); radio frequency identification high frequency (RFID HF) (13.56-13.56 MHz); radio frequency identification ultra high frequency (RFID UHF) (433 MHz, 865-956 MHz, 2450 MHz), frequency allocations for 5G may include e.g. 700MHz, 3.6-3.8GHz, 24.25-27.5GHz, 31.8-33.4GHz, 37.45-43.5, 66-71GHz, mmWave, and > 24GHz ).

A frequency band over which an antenna can efficiently operate is a frequency range where the antenna's return loss is less than an operational threshold. For example, efficient operation may occur when the antenna's return loss is better than (that is, less than) -4dB or -6dB.

Implementation of a controller 500 as shown in FIG. 5(a) may be as controller circuitry. The controller 500 may be implemented in hardware alone, have certain aspects in software including firmware alone or can be a combination of hardware and software (including firmware).

As illustrated in FIG. 5(a) the controller 500 may be implemented using instructions that enable hardware functionality, for example, by using executable instructions of a computer program 506 in a general-purpose or special-purpose processor 502 that may be stored on a computer readable storage medium (disk, memory etc.) to be executed by such a processor 502.

The processor 502 is configured to read from and write to the memory 504. The processor 502 may also comprise an output interface via which data and/or commands are output by the processor 502 and an input interface via which data and/or commands are input to the processor 502.

The memory 504 stores a computer program 506 comprising computer program instructions (computer program code) that controls the operation of the controller 500 when loaded into the processor 502. The computer program instructions, of the computer program 506, provide the logic and routines that enables the controller to perform the methods 1200 illustrated in FIG. 12. The processor 502 by reading the memory 504 is able to load and execute the computer program 506.

The controller 500 therefore comprises:
at least one processor 502; and
at least one memory 504 including computer program code
the at least one memory 504 and the computer program code configured to, with the at least one processor 502, cause the controller 500 at least to perform:
   causing 1206 switching means 321 to control a radio frequency transmission line 311 to enable, at least in part, a radio frequency coupling between a first cavity 301 and a second cavity 302, wherein the first cavity 301 and the second cavity 302 are defined by a housing arrangement 300, wherein the first cavity 301 at least partially encloses a first antenna 201 of the antenna arrangement 20, wherein the second cavity 302 at least partially encloses a second antenna 202 of the antenna arrangement 20, and wherein the radio frequency transmission line 311 extends through the housing arrangement 300 between the first cavity 301 and the second cavity 302;
   controlling 1208 the first antenna 201 or the second antenna 202 to transmit a signal;
   obtaining 1210 information associated with reception of the signal at the other of the first antenna 201 or the second antenna 202; and
   causing 1212, at least in part, provision of a calibration output dependent on the information to direct calibration of the antenna arrangement 20.

As illustrated in FIG. 5(b), the computer program 506 may arrive at the controller via any suitable delivery mechanism 508. The delivery mechanism 508 may be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid state memory, an article of manufacture that comprises or tangibly embodies the computer program 506. The delivery mechanism may be a signal configured to reliably transfer the computer program 506. The controller 500 may propagate or transmit the computer program 506 as a computer data signal.

The computer program instructions are for causing a controller 500 to perform at least the following:
causing 1206 switching means 321 to control a radio frequency transmission line 311 to enable, at least in part, a radio frequency coupling between a first cavity 301 and a second cavity 302, wherein the first cavity 301 and the second cavity 302 are defined by a housing arrangement 300, wherein the first cavity 301 at least partially encloses a first antenna 201 of the antenna arrangement 20, wherein the second cavity 302 at least partially encloses a second antenna 202 of the antenna arrangement 20, and wherein the radio frequency transmission line 311 extends through the housing arrangement 300 between the first cavity 301 and the second cavity 302;
causing controlling 1208 of the first antenna 201 or the second antenna 202 to transmit a signal;
causing obtaining 1210 of information associated with reception of the signal at the other of the first antenna 201 or the second antenna 202; and
causing 1212, at least in part, provision of a calibration output dependent on the information to direct calibration of the antenna arrangement 20.

The computer program instructions may be comprised in a computer program, a non-transitory computer readable medium, a computer program product, a machine readable medium. In some but not necessarily all examples, the computer program instructions may be distributed over more than one computer program.

Although the memory 504 is illustrated as a single component/circuitry it may be implemented as one or more separate components/circuitry some or all of which may be integrated/removable and/or may provide permanent/semi-permanent/ dynamic/cached storage.

Although the processor 502 is illustrated as a single component/circuitry it may be implemented as one or more separate components/circuitry some or all of which may be integrated/removable. The processor 502 may be a single core or multi-core processor.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' may refer to one or more or all of the following:
(a) hardware-only circuitry implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause a controller, such as a mobile phone or server, to perform various functions and
(c) hardware circuit(s) and or processor(s), such as a microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

The blocks illustrated in FIG. 12 may represent steps in a method 1200 and/or sections of code in the computer program 506. The illustration of a particular order to the blocks does not necessarily imply that there is a required or preferred order for the blocks and the order and arrangement of the block may be varied. Furthermore, it may be possible for some blocks to be omitted.

Where a structural feature has been described, it may be replaced by means for performing one or more of the functions of the structural feature whether that function or those functions are explicitly or implicitly described.

The above described examples find application as enabling components of:
telecommunication systems; automotive systems; electronic systems including consumer electronic products; distributed computing systems; media systems for generating or rendering media content including audio, visual and audio visual content and mixed, mediated, virtual and/or augmented reality; personal systems including personal health systems or personal fitness systems; navigation systems; user interfaces also known as human machine interfaces; networks including cellular, non-cellular, and optical networks; ad-hoc networks; the internet; the internet of things; virtualized networks; and related software and services.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one..." or by using "consisting".

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example. Although examples have been described in the preceding paragraphs with reference to various examples, it should be appreciated that modifications to the examples given can be made without departing from the scope of the claims. For example, the solid state/semiconductor switching means 321 (switch 371/electrochromic cell 700) could be replaced with a mechanical or electromechanical actuator for controlling the RF coupling of the RF transmission line 311, at the expense of increased moving parts, interference and durability challenges. In further modifications, an electrochromic cell 700 may span over the whole area of a divider 331/cover 331f rather than being provided in a window/aperture of a divider 331/cover 331f made from another material such as aluminium. In further modifications, the RF transmission line 311 could extend from cover 331f to cover 331f rather than through a divider 331. In further modifications, the apparatus 30 could be used for variable multi-cavity filter tuning without being associated with a calibration method.

Features described in the preceding description may be used in combinations other than the combinations explicitly described above. For example, the electrical circuit switch of FIG. 6(a) may be implemented using an electrochromic cell 700 as shown in FIG. 7(a), 7(b) or 7(c). RF transmission line antennas 351, 352 could be used in FIGS. 9 to 11.

Although functions have been described with reference to certain features, those functions may be performable by other features whether described or not.

Although features have been described with reference to certain examples, those features may also be present in other examples whether described or not.

The term 'a' or 'the' is used in this document with an inclusive not an exclusive meaning. That is any reference to X comprising a/the Y indicates that X may comprise only one Y or may comprise more than one Y unless the context clearly indicates the contrary. If it is intended to use 'a' or 'the' with an exclusive meaning then it will be made clear in the context. In some circumstances the use of 'at least one' or 'one or more' may be used to emphasis an inclusive meaning but the absence of these terms should not be taken to infer and exclusive meaning.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

## Claims

1. An apparatus (30) comprising: a housing arrangement (300) for at least partially enclosing an antenna arrangement (20), the antenna arrangement (20) including at least a first antenna (201) and a second antenna (202), the housing arrangement defining a first cavity (301) for at least partially enclosing the first antenna (201) and a second cavity (302) for at least partially enclosing the second antenna (202); a radio frequency transmission line (311) extending through the housing arrangement between the first cavity and the second cavity to enable, at least in part, a radio frequency coupling between the first cavity and the second cavity; and switching means (321) configured to control the radio frequency coupling between the first cavity and the second cavity by controlling the radio frequency transmission line, the apparatus (30) comprising an electrochromic cell (700) configured to provide the radio frequency transmission line and the switching means.

2. The apparatus of claim 1, wherein the switching means is configured to operate as an electrical circuit switch or as a controllable filter.

3. The apparatus of claim 1, wherein at least a first portion of the electrochromic cell is comprised in a signal path of the radio frequency transmission line and/or wherein a second portion of the electrochromic cell is electrically coupled to ground.

4. The apparatus of any preceding claim, wherein the radio frequency transmission line comprises one or more radio frequency transmission line antennas (351, 352).

5. The apparatus of any preceding claim, wherein the housing arrangement comprises a plurality of dividers (331a, 331b, 331c, 331d) including a first divider (331a) between the first cavity and the second cavity, and wherein the radio frequency transmission line extends through the first divider.

6. The apparatus of claim 5, wherein the plurality of dividers includes a second divider (331b) between the first cavity and a third cavity (303) for at least partially enclosing a third antenna (203), wherein the apparatus comprises a second radio frequency transmission line (311b) extending through the second divider between the first cavity and the third cavity to enable, at least in part, radio frequency coupling between the first cavity and the third cavity, and wherein the apparatus comprises second switching means (321b) configured to control the radio frequency coupling between the first cavity and the third cavity by controlling the second radio frequency transmission line.

7. The apparatus of claim 6, wherein the first cavity and the second cavity are aligned in a row and wherein the first cavity and the third cavity are aligned in a column, or wherein the first cavity and the second cavity are aligned in a column and wherein the first cavity and the third cavity are aligned in a row.

8. The apparatus of any preceding claim, wherein the housing arrangement comprises one or more covers including a first cover (331f) over the first cavity, wherein the apparatus comprises a first cover radio frequency transmission line (311f) extending through the first cover between the first cavity and an external environment to enable, at least in part, radio frequency coupling between the first cavity and the external environment, and wherein the apparatus comprises first cover switching means (321f) configured to control the radio frequency coupling between the first cavity and the external environment by controlling the first cover radio frequency transmission line.

9. A system (10) comprising the apparatus of any preceding claim, and the antenna arrangement including at least the first antenna and the second antenna.

10. The system of claim 9, comprising a controller (500) configured to control the switching means of the apparatus and to control the antenna arrangement.

11. The system of claim 10, wherein the controller is configured to perform calibration comprising: causing (1206) the switching means to control the radio frequency transmission line to enable, at least in part, the radio frequency coupling between the first cavity and the second cavity; causing (1208) the first antenna or the second antenna to transmit a signal; obtaining (1210) information associated with reception of the signal at the other of the first antenna or the second antenna; and causing (1212), at least in part, provision of a calibration output dependent on the information to direct calibration of the antenna arrangement.

12. The system of claim 11, wherein the controller is configured to: obtain (1214) an indication that the calibration is complete; cause (1216) the switching means to control the radio frequency transmission line to inhibit the radio frequency coupling between the first cavity and the second cavity; and cause (1220) the first antenna and/or the second antenna to provide radio frequency communication with one or more remote devices.

13. A base station (1) comprising the system of any one of claims 9 to 12.

## Patentansprüche

1. Einrichtung (30), umfassend: eine Gehäuseanordnung (300) zum zumindest teilweisen Umschließen einer Antennenanordnung (20), wobei die Antennenanordnung (20) mindestens eine erste Antenne (201) und eine zweite Antenne (202) einschließt, wobei die Gehäuseanordnung einen ersten Hohlraum (301) zum zumindest teilweisen Umschließen der ersten Antenne (201) und einen zweiten Hohlraum (302) zum zumindest teilweisen Umschließen der zweiten Antenne (202) definiert; eine Hochfrequenzübertragungsleitung (311), die sich durch die Gehäuseanordnung zwischen dem ersten Hohlraum und dem zweiten Hohlraum erstreckt, um zumindest teilweise eine Hochfrequenzkopplung zwischen dem ersten Hohlraum und dem zweiten Hohlraum zu ermöglichen; und Schaltmittel (321), die so konfiguriert sind, dass sie die Hochfrequenzkopplung zwischen dem ersten Hohlraum und dem zweiten Hohlraum durch Steuern der Hochfrequenzübertragungsleitung steuern, wobei die Einrichtung (30) eine elektrochrome Zelle (700) umfasst, die so konfiguriert ist, dass sie die Hochfrequenzübertragungsleitung und die Schaltmittel bereitstellt.

2. Einrichtung nach Anspruch 1, wobei das Schaltmittel so konfiguriert ist, dass es als elektrischer Schaltkreisschalter oder als steuerbarer Filter arbeitet.

3. Einrichtung nach Anspruch 1, wobei mindestens ein erster Abschnitt der elektrochromen Zelle in einem Signalpfad der Hochfrequenzübertragungsleitung enthalten ist und/oder wobei ein zweiter Abschnitt der elektrochromen Zelle elektrisch mit Masse gekoppelt ist.

4. Einrichtung nach einem der vorstehenden Ansprüche, wobei die Hochfrequenzübertragungsleitung eine oder mehrere Hochfrequenzübertragungsleitungsantennen (351, 352) umfasst.

5. Einrichtung nach einem der vorstehenden Ansprüche, wobei die Gehäuseanordnung eine Vielzahl von Teilern (331a, 331b, 331c, 331d) einschließlich eines ersten Teilers (331a) zwischen dem ersten Hohlraum und dem zweiten Hohlraum umfasst, und wobei sich die Hochfrequenzübertragungsleitung durch den ersten Teiler erstreckt.

6. Einrichtung nach Anspruch 5, wobei die Vielzahl von Teilern einen zweiten Teiler (331b) zwischen dem ersten Hohlraum und einem dritten Hohlraum (303) zum zumindest teilweisen Umschließen einer dritten Antenne (203) einschließt, wobei die Einrichtung eine zweite Hochfrequenzübertragungsleitung (311b) umfasst, die sich durch den zweiten Teiler zwischen dem ersten Hohlraum und dem dritten Hohlraum erstreckt, um zumindest teilweise eine Hochfrequenzkopplung zwischen dem ersten Hohlraum und dem dritten Hohlraum zu ermöglichen, und wobei die Einrichtung zweite Schaltmittel (321b) umfasst, die so konfiguriert sind, dass sie die Hochfrequenzkopplung zwischen dem ersten Hohlraum und dem dritten Hohlraum durch Steuern der zweiten Hochfrequenzübertragungsleitung steuern.

7. Einrichtung nach Anspruch 6, wobei der erste Hohlraum und der zweite Hohlraum in einer Reihe ausgerichtet sind und wobei der erste Hohlraum und der dritte Hohlraum in einer Spalte ausgerichtet sind, oder wobei der erste Hohlraum und der zweite Hohlraum in einer Spalte ausgerichtet sind und wobei der erste Hohlraum und der dritte Hohlraum in einer Reihe ausgerichtet sind.

8. Einrichtung nach einem der vorstehenden Ansprüche, wobei die Gehäuseanordnung eine oder mehrere Abdeckungen einschließlich einer ersten Abdeckung (331f) über dem ersten Hohlraum umfasst, wobei die Einrichtung eine erste Abdeckungshochfrequenzübertragungsleitung (311f) umfasst, die sich durch die erste Abdeckung zwischen dem ersten Hohlraum und einer äußeren Umgebung erstreckt, um zumindest teilweise eine Hochfrequenzkopplung zwischen dem ersten Hohlraum und der äußeren Umgebung zu ermöglichen, und wobei die Einrichtung erste Abdeckungsschaltmittel (321f) umfasst, die so konfiguriert sind, dass sie die Hochfrequenzkopplung zwischen dem ersten Hohlraum und der äußeren Umgebung durch Steuern der ersten Abdeckungshochfrequenzübertragungsleitung steuern.

9. System (10) umfassend die Einrichtung nach einem der vorstehenden Ansprüche und wobei die Antennenanordnung mindestens die erste Antenne und die zweite Antenne einschließt.

10. System nach Anspruch 9, umfassend eine Steuerung (500), die so konfiguriert ist, dass sie die Schaltmittel der Einrichtung steuert und die Antennenanordnung steuert.

11. System nach Anspruch 10, wobei die Steuerung so konfiguriert ist, dass sie eine Kalibrierung durchführt, die Folgendes umfasst: Veranlassen (1206) der Schaltmittel, die Hochfrequenzübertragungsleitung zu steuern, um zumindest teilweise die Hochfrequenzkopplung zwischen dem ersten Hohlraum und dem zweiten Hohlraum zu ermöglichen; Veranlassen (1208) der ersten Antenne oder der zweiten Antenne, ein Signal zu senden; Erhalten (1210) von Informationen, die sich auf den Empfang des Signals beziehen, an der jeweils anderen Antenne, d. h. der ersten oder der zweiten Antenne; und Veranlassen (1212), zumindest teilweise, der Bereitstellung eines Kalibrierungsausgangs in Abhängigkeit von den Informationen, um die Kalibrierung der Antennenanordnung zu lenken.

12. System nach Anspruch 11, wobei die Steuerung konfiguriert ist zum: Erhalten (1214) einer Angabe, dass die Kalibrierung abgeschlossen ist; Veranlassen (1216) der Schaltmittel, die Hochfrequenzübertragungsleitung zu steuern, um die Hochfrequenzkopplung zwischen dem ersten Hohlraum und dem zweiten Hohlraum zu verhindern; und Veranlassen (1220) der ersten Antenne und/oder der zweiten Antenne, Hochfrequenzkommunikation mit einer oder mehreren entfernten Vorrichtungen bereitzustellen.

13. Basisstation (1) umfassend das System nach einem der Ansprüche 9 bis 12.

## Revendications

1. Appareil (30) comprenant : un agencement de logement (300) pour renfermer au moins partiellement un agencement d'antennes (20), l'agencement d'antennes (20) incluant au moins une première antenne (201) et une deuxième antenne (202), l'agencement de logement définissant une première cavité (301) pour renfermer au moins partiellement la première antenne (201) et une deuxième cavité (302) pour renfermer au moins partiellement la deuxième antenne (202); une ligne de transmission de fréquence radio (311) s'étendant à travers l'agencement de logement entre la première cavité et la deuxième cavité pour permettre, au moins en partie, un accouplement de fréquence radio entre la première cavité et la deuxième cavité; et un moyen de commutation (321) configuré pour commander l'accouplement de fréquence radio entre la première cavité et la deuxième cavité en commandant la ligne de transmission de fréquence radio, l'appareil (30) comprenant une cellule électrochromique (700) configurée pour fournir la ligne de transmission de fréquence radio et le moyen de commutation.

2. Appareil selon la revendication 1, dans lequel le moyen de commutation est configuré pour fonctionner en tant que commutateur de circuit électrique ou en tant que filtre pouvant être commandé.

3. Appareil selon la revendication 1, dans lequel au moins une première partie de la cellule électrochromique est comprise dans un trajet de signal de la ligne de transmission de fréquence radio et/ou dans lequel une seconde partie de la cellule électrochromique est électriquement couplée à la terre.

4. Appareil selon l'une quelconque des revendications précédentes, dans lequel la ligne de transmission de fréquence radio comprend une ou plusieurs antennes de ligne de transmission de fréquence radio (351, 352).

5. Appareil selon l'une quelconque des revendications précédentes, dans lequel l'agencement de logement comprend une pluralité de diviseurs (331a, 331b, 331c, 331d) incluant un premier diviseur (331a) entre la première cavité et la deuxième cavité, et dans lequel la ligne de transmission de fréquence radio s'étend à travers le premier diviseur.

6. Appareil selon la revendication 5, dans lequel la pluralité de diviseurs inclut un deuxième diviseur (331b) entre la première cavité et une troisième cavité (303) pour renfermer au moins partiellement une troisième antenne (203), dans lequel l'appareil comprend une seconde ligne de transmission de fréquence radio (311b) s'étendant à travers le deuxième diviseur entre la première cavité et la troisième cavité pour permettre, au moins en partie, un accouplement de fréquence radio entre la première cavité et la troisième cavité, et dans lequel l'appareil comprend un second moyen de commutation (321b) configuré pour commander l'accouplement de fréquence radio entre la première cavité et la troisième cavité en commandant la seconde ligne de transmission de fréquence radio.

7. Appareil selon la revendication 6, dans lequel la première cavité et la deuxième cavité sont alignées dans une rangée et dans lequel la première cavité et la troisième cavité sont alignées dans une colonne, ou dans lequel la première cavité et la deuxième cavité sont alignées dans une colonne et dans lequel la première cavité et la troisième cavité sont alignées dans une rangée.

8. Appareil selon l'une quelconque des revendications précédentes, dans lequel l'agencement de logement comprend un ou plusieurs couvercles incluant un premier couvercle (331f) par-dessus la première cavité, dans lequel l'appareil comprend une ligne de transmission de fréquence radio de premier couvercle (311f) s'étendant à travers le premier couvercle entre la première cavité et un environnement extérieur pour permettre, au moins en partie, un accouplement de fréquence radio entre la première cavité et l'environnement extérieur, et dans lequel l'appareil comprend un moyen de commutation de premier couvercle (321f) configuré pour commander l'accouplement de fréquence radio entre la première cavité et l'environnement extérieur en commandant la ligne de transmission de fréquence radio de premier couvercle.

9. Système (10) comprenant l'appareil selon l'une quelconque des revendications précédentes, et l'agencement d'antennes incluant au moins la première antenne et la deuxième antenne.

10. Système selon la revendication 9, comprenant un équipement de commande (500) configuré pour commander le moyen de commutation de l'appareil et pour commander l'agencement d'antennes.

11. Système selon la revendication 10, dans lequel l'équipement de commande est configuré pour réaliser un étalonnage comprenant : le fait d'amener (1206) le moyen de commutation à commander la ligne de transmission de fréquence radio pour permettre, au moins en partie, l'accouplement de fréquence radio entre la première cavité et la deuxième cavité; le fait d'amener (1208) la première antenne ou la deuxième antenne à transmettre un signal; l'obtention (1210) d'une information associée à un réception du signal au niveau de l'autre parmi la première antenne ou la deuxième antenne; et le fait de provoquer (1212), au moins en partie, la fourniture d'une sortie d'étalonnage en fonction de l'information pour diriger l'étalonnage de l'agencement d'antennes.

12. Système selon la revendication 11, dans lequel l'équipement de commande est configuré pour : obtenir (1214) une indication indiquant que l'étalonnage est terminé; amener (1216) le moyen de commutation à commander la ligne de transmission de fréquence radio pour empêcher l'accouplement de fréquence radio entre la première cavité et la deuxième cavité; et amener (1220) la première antenne et/ou la deuxième antenne à fournir une communication de fréquence radio avec un ou plusieurs dispositifs à distance.

13. Station de base (1) comprenant le système selon l'une quelconque des revendications 9 à 12.
